# FASCICULE DE BREVET EUROPEEN

(11) **EP 4 609 463 B1**
(45) Date de publication et mention de la délivrance du brevet: **02.12.2026**
(21) Numéro de dépôt: 23798440.6
(22) Date de dépôt: 26.10.2023
(51) Int. Cl.: H01M 50/403, H01M 10/0525, H01M 50/414, H01M 50/431, H01M 50/434, H01M 50/443, H01M 50/446, H01M 50/449, H01M 50/457, H01M 50/44

(54) **SÉPARATEUR ISOLANT POUR BATTERIE ÉLECTRIQUE**
ISOLIERENDER SEPARATOR FÜR EINE ELEKTRISCHE BATTERIE
INSULATING SEPARATOR FOR AN ELECTRIC BATTERY

(30) Priorité: 27.10.2022 FR 2211196
(43) Date de publication de la demande: 03.09.2025
(73) Titulaire: Keey Aerogel, 68440 Habsheim (FR)
(72) Inventeur: O'CONNOR, Michael, 67300 Schiltigheim (FR); PHILIPPE, Kanda, 68990 Galfingue (FR); RUIZ GONZALEZ, Francisco Manuel, 4058 Basel (CH)
(74) Mandataire: Hege, Frédéric
(86) Numéro de dépôt international: PCT/EP2023/080014
(87) Numéro de publication internationale: WO 2024/089218

(56) Documents cités:
- EP-A1- 3 478 400
- EP-A1- 3 993 139
- CN-A- 114 976 472
- KR-A- 20180 107 054
- US-A- 6 148 503
- US-A1- 2015 280 195

## Description

La présente invention se situe dans le domaine des batteries électriques. Elle concerne plus particulièrement un séparateur de cellules pour batterie électrique.

Présentant l'avantage de faibles rejets de CO₂, les véhicules électriques et hybrides électriques connaissent un développement important. Ces véhicules comportent des batteries, habituellement de type lithium-ion. Il peut arriver que ces batteries connaissent un phénomène d'emballement thermique, ou « thermal runaway », au cours duquel la température augmente spontanément à l'intérieur de la batterie. La batterie peut alors chauffer jusqu'à prendre feu ou exploser. La gestion de ce risque est donc un enjeu important de sécurité. Pour ce faire, un des enjeux est de limiter et/ou ralentir la propagation de chaleur et/ou de feu entre les cellules adjacentes d'une batterie.

Le document WO2006137935 divulgue un séparateur isolant thermique pouvant être disposé entre les cellules d'une batterie. Il comporte un aérogel renforcé par des fibres, encapsulé dans un polymère. Cette solution est très coûteuse, et peu performante en termes d'isolation thermique.

L'état de la technique
D1 US 6 148 503
D2 CN 114 976 472
D3 EP 3 993 139
D4 KR 2018 0107054
D5 EP 3 478 400
D6 US 2015/280195

D1 se réfère à une méthode de formation d'une couche séparatrice composite poreuse comprenant les étapes revêtir une couche d'une solution de précurseur de séparateur sur la surface de l'une des électrodes et durcissement de la couche. La solution de précurseur est formulée sous forme d'encre comprenant un matériau de charge aérogel de silice dispersé dans une solution de liant polyoléfine chloré qui est dissous dans un solvant approprié.

D2 divulgue un séparateur de batterie en aérogel, comprenant une couche de base, caractérisé par le fait que la couche de base est un tissu non tissé et qu'au moins un côté de la couche de base est recouvert d'une couche d'aérogel.

D3 décrit un séparateur de batterie comprenant une couche comprenant des aérogels de silice qui sont liés entre eux par des fibres polymères ou inorganiques. Le séparateur comprend également deux couches élastiques en élastomère de silicium.

D4 fait référence à un séparateur de batterie comprenant un aérogel de graphène et un polymère hydrophile.

D5 décrit la fabrication d'un aérogel granulaire.

D6 décrit un séparateur de batterie comprenant une base poreuse et une couche de revêtement comprenant des particules inorganiques et un liant silicaté.

Un objet de la présente invention est de proposer un séparateur isolant aux performances d'isolation thermique, de résistance au feu, et de tenue dans le temps améliorées.

Un objet de la présente invention est de proposer un séparateur isolant thermique, électrique, et hautement compressible.

Un autre objet de la présente invention est de proposer un séparateur isolant simple, multiperformant et constituant une pièce unique facile à intégrer dans une batterie existante.

La présente invention a pour objet de répondre au moins en partie aux objets précités en proposant un séparateur composé en majeure partie d'un liant, pour la tenue mécanique, et d'aérogel, pour la résistance thermique et au feu. A cet effet, elle propose un séparateur apte à séparer deux cellules d'une batterie, par exemple de véhicule électrique ou hybride électrique, ledit séparateur comportant au moins une couche d'isolation comprenant un matériau composite, ledit matériau composite comprenant un liant mélangé avec des particules d'aérogel, de préférence la teneur en volume desdites particules d'aérogel (5) dans ledit matériau composite (4) étant supérieure à 20 %, et la somme des teneurs en poids desdites particules d'aérogel (5) et dudit liant dans ledit matériau composite (4) étant supérieure à 80% ; le liant utilisé est un liant de type minéral.

Grâce à ces dispositions, la vitesse de propagation de la chaleur et/ou de feu entre deux cellules de batterie peut être réduite, les risques d'incendie se propageant hors de la batterie, ou d'explosion de la batterie, sont également réduits. Cette solution a de plus une bonne tenue dans le temps, les contraintes appliquées à la batterie n'endommagent pas le séparateur ; la solution est simple à fabriquer. De plus un tel liant de type minéral permet de fabriquer des pâtes avec une proportion plus importante d'aérogel. Cela a pour conséquence que le poids est encore d'avantage réduit, mais surtout que la conductivité thermique est réduite, puisqu'elle se rapproche davantage de celle de l'aérogel

Selon d'autres caractéristiques :
- ledit séparateur peut comporter au moins une couche supplémentaire, ladite couche supplémentaire étant, au niveau de toute zone carrée d'une aire supérieure ou égale à 4 cm2 située sur une de ses faces externes, apte à se déformer afin d'absorber au moins une partie d'une réduction du volume dudit séparateur, ce qui permet d'éviter une usure d'éléments de la batterie due à la dilatation des cellules,
- au moins une desdites au moins une couche supplémentaire peut comporter au moins une couche d'un papier en fibre de céramique, ce qui est un moyen de réalisation simple et robuste de l'invention,
- au moins une desdites au moins une couche supplémentaire peut présenter sur au moins une de ses faces une forme tridimensionnelle, par exemple en forme en nid d'abeille, ce qui est une solution simple à mettre en œuvre, et permet de réaliser un séparateur avec une tenue dans le temps améliorée,
- ladite couche d'isolation peut comporter au moins un élément de renforcement mécanique, par exemple en forme de nid d'abeille, ce qui permet d'assurer la bonne tenue de cette couche, par exemple lorsque le liant a tendance à s'effriter,
- ledit liant peut comporter une matière minérale, par exemple un hydroxyde de calcium, la teneur en volume desdites particules d'aérogel dans ledit matériau composite étant supérieure à 90 %, la teneur en poids de ladite matière minérale dans ledit liant étant supérieure à 50%, ce qui est une solution permettant de réduire le poids du séparateur, et d'obtenir des conductivités thermiques particulièrement intéressantes,

La présente invention concerne également une batterie de véhicule électrique ou hybride électrique comportant au moins deux cellules, et au moins un séparateur isolant selon l'invention disposé entre lesdites cellules.

Grâce à ces dispositions, la vitesse de propagation de la chaleur et/ou de feu entre deux cellules de batterie peut être réduite, les risques d'incendie se propageant hors de la batterie ou d'explosion de la batterie sont également réduits. Cette solution a de plus une bonne tenue dans le temps, les contraintes appliquées à la batterie n'endommagent pas le séparateur ; la solution est simple à fabriquer.

La présente invention concerne enfin un procédé de fabrication d'un séparateur isolant selon l'une des revendications 11 à 14, comportant les étapes suivantes :
- fabrication des particules d'aérogel,
- mélange des particules d'aérogel avec ledit liant à l'état liquide,
- durcissement du mélange obtenu dans un moule afin d'obtenir ledit matériau composite.

Grâce à ces dispositions, le séparateur selon l'invention peut être réalisé de façon simple.

Selon d'autres caractéristiques :
- la fabrication dudit aérogel peut comporter les sous-étapes suivantes :
   - mélange d'un précurseur avec un solvant de synthèse et un agent d'hydrolyse tel que l'eau, et le cas échéant un catalyseur, pour obtenir un gel,
   - granulation du produit obtenu par découpe d'un jet dudit gel, pour obtenir des particules,

ce qui permet d'obtenir des particules moins anguleuses, et donc moins cassantes et risquant moins de se fendre,
   - la fabrication dudit aérogel peut comporter la sous-étape suivante :
      - séchage des particules, intégralement opéré à une pression supérieure au point critique du CO₂.
ce qui permet d'éviter de casser les particules d'aérogel, et permet d'obtenir un aérogel hydrophile,
   - la fabrication dudit aérogel peut comporter les sous-étapes suivantes :
      - mélange d'un précurseur avec un solvant de synthèse et un agent d'hydrolyse tel que l'eau, et le cas échéant un catalyseur, pour obtenir un gel,
      - granulation du produit obtenu, pour obtenir des particules,
      - maintien des particules en contact avec le solvant de synthèse et l'agent d'hydrolyse,
      - lavage des particules par ajout d'un solvant de lavage pour en extraire notamment l'agent d'hydrolyse et le cas échéant le catalyseur,
      - séchage des particules pour en extraire les solvants de synthèse et/ou de lavage par envoi en excès de CO₂ supercritique,
les sous-étapes de granulation, maintien, lavage et séchage sont opérées à une pression supérieure au point critique du CO₂, et ces conditions sont maintenues entre ces étapes, ce qui permet de fabriquer l'aérogel en continu ; la durée de fabrication ainsi que les coûts en sont nettement réduits, et la qualité du produit en est améliorée, du fait d'une réduction des étapes risquées de changement d'état et de dépressurisation.

La présente invention sera mieux comprise à la lecture de la description détaillée qui fait suite, en référence aux figures annexées dans lesquelles :
[Fig.1] La [Fig.1] est une vue schématique en coupe d'une batterie comportant un séparateur selon l'invention.
[Fig.2] La [Fig.2] est une vue schématique en coupe d'une isolant selon l'invention.

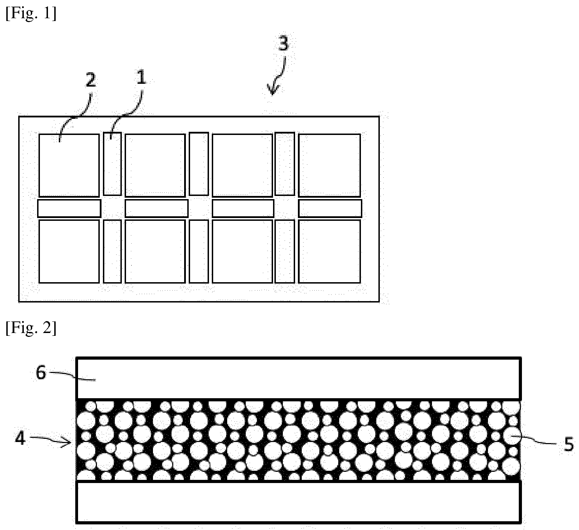

Le séparateur 1 selon l'invention, représenté dans un mode de réalisation préféré en [Fig.2], est destiné à être intégré entre les cellules 2 d'une batterie 3, comme représenté en [Fig.1].

Dans une batterie 3, le séparateur 1 peut être disposé entre toutes les cellules 2 adjacentes, ce qui permet d'avoir une efficacité maximale pour prévenir la propagation de chaleur ou de feu dans la batterie. Alternativement, afin par exemple d'obtenir une batterie plus petite, le séparateur 1 peut être disposé entre des groupes de cellules 2, et par exemple placé toutes les deux ou trois cellules 2.

La forme et les dimensions du séparateur peuvent varier selon les applications.

Les dimensions de la face d'une cellule 2 adjacente au séparateur est par exemple de 200 x 100 mm, ou de 300 x 100 mm. Le séparateur est alors de préférence en forme de parallélépipède rectangle de ces dimensions.

L'épaisseur du séparateur peut par exemple être comprise entre 2 et 4 mm, ce qui convient pour un grand nombre d'applications.

La présente invention peut s'appliquer à toute batterie, particulièrement les batteries ayant besoin d'une gestion de la chaleur et les batteries sujettes à une dilatation de leurs cellules.

La présente invention s'applique notamment aux batteries de véhicule électrique ou hybride électrique. Un véhicule électrique est un véhicule dont la propulsion est assurée exclusivement par un ou plusieurs moteurs électriques, et un véhicule hybride électrique est un véhicule qui comporte un ou plusieurs moteurs électriques aptes à assurer la propulsion du véhicule, et un ou plusieurs autres types de moteurs, généralement thermiques, aptes à assurer la propulsion du véhicule.

La présente invention peut également s'appliquer aux batteries de véhicules à hydrogène.

La présente invention peut enfin s'appliquer aux batteries domestiques, utilisées par exemple pour stocker l'électricité produite par des panneaux solaires.

La batterie 3 est de préférence une batterie lithium-ion. Ce type de batterie est aujourd'hui couramment utilisée pour ses performances en termes d'autonomie et son faible coût. Toutefois, elle est aussi particulièrement sujette aux risques d'emballement thermique.

Le véhicule peut être de toute catégorie, notamment une voiture, un camion, une camionnette, ou encore une motocyclette.

Le séparateur selon l'invention comporte au moins une couche d'isolation. La couche d'isolation comprend un matériau composite 4, comprenant un liant mélangé avec des particules d'aérogel 5.

Le liant permet de maintenir les particules d'aérogel 5 dans une répartition optimale au sein du séparateur.

Le séparateur 1 est de préférence conforme à la norme UL 94 V0, qui concerne la résistance à une flamme.

Le séparateur 1 a de préférence une résistance thermique qui lui permet de résister deux minutes avec un côté à 800°C, et l'autre côté maintenu en-dessous de 150 °C.

Le séparateur 1 a de préférence une résistance thermique et aux flammes qui lui permettent de résister dix minutes avec un côté à 1400°C avec présence de flammes, et l'autre côté maintenu en-dessous de 300 °C.

Les particules d'aérogel 5 ont une taille comprise entre 0,015 et 3 mm.

L'aérogel 5 peut être un aérogel hydrophobe ou hydrophile.

De préférence, l'aérogel est hydrophobe.

L'aérogel 5 peut être basé sur tout matériau pertinent pour cette application. Il peut s'agir par exemple d'un aérogel de silice, d'un aérogel hybride silice-polymère, d'un aérogel de carbone, ou d'un mélange de certains de ces aérogels.

L'aérogel 5 est de préférence un aérogel de silice, qui est un très bon isolant thermique, avec une conductivité thermique par exemple de l'ordre de 0,012 W/m.K. L'aérogel de silice peut par exemple être réalisé avec des matières premières dont plus de 75% en poids sont des matériaux recyclés issus de l'industrie de la démolition, ce qui permet de réduire le coût de fabrication et de réduire la consommation d'énergie nécessaire à la fabrication des matières premières.

Le liant peut être de type minéral, c'est-à-dire qu'il comporte une matière minérale dont la teneur en poids représente au moins 50% du liant. Il s'agit par exemple d'un hydroxyde de calcium, qui présente l'avantage d'avoir un poids réduit. De plus un tel liant permet de fabriquer des pâtes avec une proportion plus importante d'aérogel. Cela a pour conséquence que le poids est encore d'avantage réduit, mais surtout que la conductivité thermique est réduite, puisqu'elle se rapproche davantage de celle de l'aérogel.

Dans certains modes de réalisation, la couche d'isolation peut comporter un élément de renforcement, par exemple en forme de nid d'abeille tel que le produit « Nomex Honeycomb » (marque déposée) commercialisé par la société DuPont, réalisé en papier couvert de résine phénolique. Différents types de matrices peuvent être utilisés, dans différents matériaux que l'homme du métier saura choisir, par exemple un papier céramique. Un tel élément de renforcement est particulièrement intéressant lorsque le liant, par exemple de type minéral, a tendance à s'effriter.

La teneur en volume des particules d'aérogel 5 dans le matériau composite 4 est supérieure à 20 %, ce qui permet de conférer au matériau composite 4 une bonne isolation thermique.

Le liant et les particules d'aérogel 5 représentent la plus grande partie du matériau composite 4, en particulier la somme de la teneur en poids des particules d'aérogel 5 et de l'élastomère dans le matériau composite 4 est supérieure à 80%, de préférence supérieure à 90%. Le matériau composite 4 peut, en plus du liant et des particules d'aérogel 5, comporter différents additifs, par exemple un agent tensio-actif permettant d'optimiser la distribution des particules d'aérogel 5 dans le matériau composite 4.

Le séparateur 1 peut comporter également au moins une couche supplémentaire 6. En effet le volume des cellules 2 d'une batterie 3, en particulier leur épaisseur, peut varier pendant le cycle de charge/décharge. Le bloc batterie, qui comporte les cellules 2 et les séparateurs 3, ayant un volume constant, les séparateurs 3 doivent pouvoir faire face à une réduction du volume qui leur est alloué. Lorsque le volume du séparateur 1 est réduit, la couche supplémentaire 6 est configurée pour limiter la montée en pression à l'intérieur du matériau composite 4, particulièrement au niveau des particules d'aérogel 5 qui risquent de casser sous l'effet d'une haute pression. La couche supplémentaire 6 est décrite plus en détails plus loin.

Dans certains modes de réalisation particuliers, le séparateur 1 comporte deux couches supplémentaires, chacune située de part et d'autre de la couche d'isolation.

Dans d'autres modes de réalisation, le séparateur 1 comporte une couche supplémentaire disposée entre deux couches d'isolation.

La couche supplémentaire 6 est apte à se déformer afin d'absorber une réduction du volume du séparateur 1. Afin d'obtenir une efficacité sur toute la surface du séparateur 1, la couche supplémentaire 6 est apte à se déformer au niveau de toute zone carrée d'une aire supérieure ou égale à 4 cm2 située sur une de ses faces externes.

Dans un mode de réalisation préféré de l'invention, la couche supplémentaire 6 comporte au moins une couche d'un papier en fibre de céramique. Il s'agit par exemple du EST C30 ou EST C310, commercialisés par la société Morgan Advanced Materials. Le papier en fibre de céramique est par exemple disposé d'un côté de la couche d'isolation, par exemple par collage ou par laminage, ou des deux côtés, c'est-à-dire entre la couche d'isolation et les parois des cellules 2 disposées de part et d'autre du séparateur 1. C'est alors cette couche de papier en fibre de céramique qui absorbe la réduction de volume induite par la réduction d'épaisseur du séparateur 1, et la couche d'isolation ne subit pas ou presque pas de diminution de volume. La couche de papier en fibre de céramique peut présenter une épaisseur de l'ordre de 1 mm.

La couche supplémentaire 6 peut également comporter au moins une couche d'un élastomère, par exemple un élastomère de silicone.

La couche supplémentaire 6 peut encore comporter une mousse de silicone, telle que celle commercialisée par la société Saint-Gobain sous le nom Norseal (marque déposée).

Dans un autre mode de réalisation, la couche supplémentaire 6 présente une forme tridimensionnelle. Une telle couche peut être réalisée en un élastomère. Cette forme comporte alors des zones de compression ; par exemple la forme peut être une forme en nid d'abeille, et les arêtes formées par les hexagones constituent les zones de compression. Ces zones de compression permettent d'absorber les variations de volume du séparateur 1 en déformant une partie du séparateur 1, le reste du séparateur 1 pouvant conserver un volume proche de son volume initial. Par exemple, les arêtes des hexagones s'élargissent dans un plan perpendiculaire à l'effort de sorte que l'épaisseur du séparateur 1 peut diminuer sans augmentation significative de la pression. La couche supplémentaire 6 peut être directement moulée ou coulée dans une forme présentant les zones de compression.

Les différents modes de réalisation de la couche supplémentaire 6, c'est-à-dire le papier en fibre de céramique, l'élastomère, la mousse de silicone, ou encore la forme tridimensionnelle, peuvent être utilisés individuellement, ou en combinaison.

Le séparateur 1 selon l'invention peut comporter une enveloppe de protection, par exemple en PET, permettant de protéger notamment ses couches d'isolation et de gestion de la réduction du volume. Cette protection est notamment utile lorsque le liant est de type minéral qui a tendance à s'effriter.

La présente invention concerne également une batterie 3 de véhicule électrique ou hybride électrique comportant au moins deux cellules 2, et au moins un séparateur isolant 1 disposé entre lesdites cellules 2.

La présente invention concerne enfin un procédé de fabrication d'un séparateur 1 comportant les étapes suivantes :
- fabrication des particules d'aérogel,
- mélange des particules d'aérogel avec ledit liant, par exemple un hydroxyde de Calcium. Le liant, peut être dissous dans un solvent,
- durcissement du mélange obtenu dans un moule afin d'obtenir ledit matériau composite. Un élément de renforcement mécanique, par exemple une matrice structurante en forme de nid d'abeille, peut être ajoutée dans le moule. Le durcissement est par exemple réalisé par une montée en température, par l'ajout d'un catalyseur, ou encore par l'évaporation d'un solvant.

### Exemple

Pour préparer un séparateur selon l'invention, 14.19 % en masse d'hydroxyde de calcium ont été mélangés avec de l'eau. Puis, 85.8 % en masse d'aérogels de silice hydrophobe, de granulométries établies par tamisage comprises entre 15 et 3000 microns et de masse volumique 70 kg/m3, et 0.01% en masse d'opacifiant ont été ajoutés et mélangés pendant 10 min. On obtient une composition homogène ayant la consistance d'une pâte. Cette pâte a été étalée sur une plaque en forme de nid d'abeille. On a laissé sécher la pâte disposée dans la plaque à une température de 35 °C pendant 10 heures. On obtient un séparateur isolant caractérisé comme suit :
Masse volumique apparente de la pâte après séchage : 160 kg/m3
Masse volumique du séparateur (pâte + plaque) : 240 kg/m3
Conductivité thermique de la pâte après séchage : 18 mW/m.K à 20 °C
Conductivité thermique du séparateur (pâte + plaque) : 23 mW/m.K à 20 °C

Dans l'exemple 1 ci-dessus, un hydroxyde de calcium quasi pur a été utilisé comme liant. On peut aussi utiliser comme liant un mélange d'environ 30% d'hydroxyde de calcium et d'autres matières minérales, qu'on peut trouver dans le commerce ; on augmente alors légèrement la masse de liant, par exemple à 25% de masse d'un tel liant au lieu de 14,19%.

Selon l'épaisseur du séparateur, notamment entre 1 mm et 4 mm, la température de séchage peut varier entre 20 et 50°C, et le temps de séchage entre 4 et 24 heures.

Selon le type d'aérogel utilisé, et notamment sa masse volumique qui peut varier entre 50 et 150 kg/m3, selon le liant utilisé - hydroxyde de calcium quasi pur, ou mélange de matériaux minéraux - et selon la plaque utilisée, la masse volumique du matériau composite peut varier entre 120 et 300 kg/m3.

Selon la forme et la masse volumique de la plaque utilisée, qu'elle soit en forme de nid d'abeille ou non, on peut obtenir des teneurs volumiques de l'aérogel par rapport au séparateur qui peuvent être relativement basses, de préférence supérieures à 20% pour profiter des caractéristiques isolantes de l'aérogel ; on peut aussi mettre en œuvre des plaques fines et peu massiques, et arriver à des teneurs volumiques de l'aérogel par rapport au séparateur supérieures à 80% ; dans certains cas elle dépasse 90% ou même 99% en volume, ce qui permet d'obtenir des résultats particulièrement bons.

On peut aussi laisser sécher la pâte obtenue dans un moule, et on obtient ainsi un matériau composite qu'on peut mettre en œuvre dans un séparateur selon l'invention sans qu'il y ait besoin d'y ajouter la plaque en forme de nid d'abeille. On obtient un séparateur dans lequel la part d'aérogel peut largement dépasser les 90% en volume.

D'autres exemples ont été testés :
- 7,5% en masse d'hydroxyde de calcium mélangé à 92,5% d'un aérogel de masse volumique 50 kg/m3 ; on obtient une pâte, de masse volumique 140 kg/ m3.
- 3,7% en masse d'hydroxyde de calcium mélangé à 96,3% d'un aérogel de masse volumique 90 kg/m3 ; on obtient une pâte, de masse volumique 166 kg/ m3.
- 2% en masse d'hydroxyde de calcium mélangé à 98% d'un aérogel de masse volumique 150 kg/m3 ; on obtient une pâte, de masse volumique 207 kg/m3.

Les conductivités thermiques obtenues étaient similaires à celle obtenue dans l'exemple ci-dessus.

Lors de la fabrication des particules d'aérogel, le procédé ci-dessus peut comporter les sous-étapes suivantes :
- mélange d'un précurseur avec un solvant de synthèse et un agent d'hydrolyse tel que l'eau, et le cas échéant un catalyseur, pour obtenir un gel,
- granulation du produit obtenu par découpe d'un jet dudit gel, pour obtenir des particules.

Le gel passe par exemple par une ouverture dont la taille correspond à la granulométrie voulue. Le jet se formant en sortie de l'ouverture est ensuite découpé à une fréquence dépendant également de la granulométrie.

La granulation par découpe d'un jet permet d'obtenir des particules d'aérogel présentant une forme relativement régulière et comportant peu d'angles. Ceci permet qu'une fois intégrées au séparateur 1, les risques que les particules d'aérogels 5 se cassent ou se fissurent, notamment sous l'effet d'un effort subi résultant de l'expansion des cellules 2 de la batterie 3, sont réduits.

Lors de la fabrication des particules d'aérogel, le procédé de fabrication d'un séparateur 1 peut comporter la sous-étape suivante :
- séchage des particules, intégralement opéré à une pression supérieure au point critique du CO₂.

Un tel séchage permet d'une part d'éviter une détérioration des particules pendant le séchage, et d'autres part de s'assurer que les particules d'aérogel restent hydrophiles. En effet, d'autres types de séchage comportant par exemple une étape d'évaporation à l'air ambiant, peuvent résulter en une perte du caractère hydrophile des particules d'aérogel.

Enfin lors de la fabrication des particules d'aérogel, le procédé de fabrication d'un séparateur 1 peut être un procédé en continu, connu par l'homme du métier et décrit dans le document FR1670366. Ce procédé comporte les étapes suivantes :
- mélange d'un précurseur avec un solvant de synthèse et un agent d'hydrolyse tel que l'eau, et le cas échéant un catalyseur, pour obtenir un gel,
- granulation du produit obtenu, pour obtenir des particules,
- maintien des particules en contact avec le solvant de synthèse et l'agent d'hydrolyse,
- lavage des particules par ajout d'un solvant de lavage pour en extraire notamment l'agent d'hydrolyse et le cas échéant le catalyseur,
- séchage des particules pour en extraire les solvants de synthèse et/ou de lavage par envoi en excès de CO₂ supercritique,
les sous-étapes de granulation, maintien, lavage et séchage sont opérées à une pression supérieure au point critique du CO₂, et ces conditions sont maintenues entre ces étapes.

Grâce à ces dispositions, le procédé de fabrication d'aérogel peut se dérouler en continu, l'entrée en pression pouvant se faire à une étape ou les produits sont encore des fluides. En effet dès que les produits sont solides (dès après la granulation), une montée en pression ne peut plus se faire de façon continue. Grâce à l'invention, les produits ne nécessitent aucune montée en pression une fois qu'ils sont solides, ni dépressurisation, à part la dépressurisation finale. La durée de fabrication ainsi que les coûts en sont nettement réduits, et la qualité du produit en est améliorée, du fait d'une réduction des étapes risquées de changement d'état et de dépressurisation. De plus ce procédé permet de mettre en œuvre une étape de séchage intégralement opéré à une pression supérieure au point critique du CO₂, sans augmenter les coûts.

Dans ce procédé en continu, les caractéristiques suivantes peuvent être mises en œuvre :
- l'étape de mélange peut être également opérée à une pression supérieure au point critique du CO₂, ce qui permet une légère accélération de cette étape,
- lors de l'étape de séchage, les particules chargés de solvant peuvent être soumis à un jet de CO₂ supercritique de sorte à les mettre dans des conditions de lit fluidisé, dans des conditions de température et de pression telles que le CO₂ est supercritique, et que les particules chargées de solvant sont plus lourdes que les particules chargées de CO₂, ceci permettant d'effectuer l'étape de séchage en continu, et d'accélérer l'étape de séchage,
- le solvant de synthèse et/ou de lavage peut être un solvant organique et l'étape de séchage être réalisée sous une pression comprise entre 100 et 200 bars et une température comprise entre 35 et 50°C, l'éthanol étant un produit peu cher et convenant au procédé, et les conditions entre 100 et 200 bars et 35 et 50 °C permettant qu'à certaines vitesses d'injection de CO₂ dans le lit fluidisé, les particules comprenant de l'éthanol ne s'envolent pas, alors que celles ne contenant que du CO₂ supercritique s'envolent par le haut de la tour, et peuvent être récupérées pour la suite du procédé,
- le procédé de fabrication d'aérogel peut comprendre, après l'étape de séchage, une étape de remplacement du CO₂ supercritique par un gaz inerte, de préférence l'azote, puis une étape de décompression, de préférence par paliers, cette étape supplémentaire permettant d'effectuer une décompression rapide, sans endommager les particules d'aérogel,
- lors de l'étape de remplacement du CO₂ supercritique par un gaz inerte, les particules chargés de CO₂ supercritique peuvent être soumis à un jet dudit gaz inerte, de sorte à les mettre dans des conditions de lit fluidisé, dans des conditions de température et de pression telles que le CO₂ est supercritique, et que les particules chargées de CO₂ supercritique sont plus lourdes que les particules chargées du gaz inerte, ceci permettant d'effectuer l'étape de remplacement du CO₂ supercritique par un gaz inerte en continu et d'accélérer cette étape.

Le procédé de fabrication continu des particules d'aérogel peut être mis en œuvre dans une installation pour la fabrication d'un aérogel en particules à partir d'un précurseur, comportant :
- un réacteur de mélange,
- un dispositif de granulation, apte à former des particules à partir d'un jet de liquide gélifié venant du réacteur de mélange, le cas échéant situé à l'intérieur du réacteur de vieillissement,
- un réacteur de vieillissement,
- un réacteur de lavage,
- un dispositif de séchage,
- un dispositif de décompression.

Cette installation est particulière en ce que le réacteur de vieillissement, le réacteur de lavage et le réacteur de séchage, ainsi que les moyens de transfert de produits entre ces réacteurs, sont configurés pour fonctionner et permettre le maintien desdits produits d'un réacteur à l'autre à une pression supérieure au point critique du CO₂.

Grâce à ces dispositions, l'installation permet de fabriquer des particules d'aérogel en continu, l'entrée en pression pouvant se faire à une étape ou les produits sont encore des fluides.

Dans cette installation, les caractéristiques suivantes peuvent être mises en œuvre :
- le réacteur de mélange peut également être configuré pour fonctionner et permettre le maintien desdits produits d'un réacteur à l'autre à une pression supérieure au point critique du CO₂ ; ceci permet notamment de réduire encore le temps de réaction,
- l'installation peut comporter en outre une première tour à lit fluidisé configurée pour permettre le remplacement du solvant contenu dans les particules par du CO₂ supercritique, ceci permettant d'effectuer le séchage des particules en continu, et d'accélérer l'étape de séchage,
- l'installation peut comporter en outre une seconde tour à lit fluidisé configurée pour permettre le remplacement du CO₂ supercritique contenu dans les particules par un gaz inerte pressurisé, de préférence de l'azote, permettant d'effectuer une décompression rapide, sans endommager les particules d'aérogel.

## Revendications

1. Séparateur (1) apte à séparer deux cellules (2) d'une batterie (3), par exemple de véhicule électrique ou hybride électrique, ledit séparateur (1) comportant au moins une couche d'isolation comprenant un matériau composite (4), ledit matériau composite (4) comprenant un liant mélangé avec des particules d'aérogel (5), le liant et les particules d'aérogel (5) représentant la plus grande partie du matériau composite (4), **caractérisé en ce que** la teneur en volume desdites particules d'aérogel (5) dans ledit matériau composite (4) est supérieure à 20 %, et **en ce que** le liant est de type minéral, en particulier le liant comporte une matière minérale dont la teneur en poids représente au moins 50% du liant.

2. Séparateur (1) selon la revendication précédente, dans lequel la somme des teneurs en poids desdites particules d'aérogel (5) et dudit liant dans ledit matériau composite (4) est supérieure à 80%.

3. Séparateur selon l'une des revendications précédentes, comportant au moins une couche supplémentaire (6), ladite couche supplémentaire (6) étant, au niveau de toute zone carrée d'une aire supérieure ou égale à 4 cm2 située sur une de ses faces externes, apte à se déformer afin d'absorber au moins une partie d'une réduction du volume dudit séparateur.

4. Séparateur selon l'une des revendications précédentes, dans lequel au moins une desdites au moins une couche supplémentaire (6) comporte un papier en fibre de céramique.

5. Séparateur selon l'une des revendications précédentes, dans lequel au moins une desdites au moins une couche supplémentaire (6) présente sur au moins une de ses faces une forme tridimensionnelle, par exemple en forme de nid d'abeille.

6. Séparateur selon l'une des revendications précédentes, dans lequel ladite couche d'isolation comporte au moins un élément de renforcement mécanique, par exemple en forme de nid d'abeille.

7. Séparateur selon l'une des revendications précédentes, dans lequel ledit liant comprend au moins 30% d'hydroxyde de calcium.

8. Séparateur selon la revendication précédente, dans lequel ledit liant comporte au moins 50%, de préférence au moins 80% d'hydroxyde de calcium.

9. Séparateur selon l'une des revendications précédentes, dans lequel la teneur en volume desdites particules d'aérogel (5) dans ledit matériau composite (4) est supérieure à 90 %.

10. Batterie (3) de véhicule électrique ou hybride électrique comportant au moins deux cellules (2), et au moins un séparateur (1) selon l'une des revendications précédentes disposé entre lesdites cellules (2).

11. Procédé de fabrication d'un séparateur (1) selon l'une des revendications 1 à 9, comportant les étapes suivantes :
- fabrication des particules d'aérogel (5),
- mélange des particules d'aérogel (5) avec ledit liant à l'état liquide,
- durcissement du mélange obtenu dans un moule afin d'obtenir ledit matériau composite (4).

12. Procédé de fabrication selon la revendication précédente, dans lequel la fabrication des particules d'aérogel (5) comporte les sous-étapes suivantes :
- mélange d'un précurseur avec un solvant de synthèse et un agent d'hydrolyse tel que l'eau, et le cas échéant un catalyseur, pour obtenir un gel,
- granulation du produit obtenu par découpe d'un jet dudit gel, pour obtenir des particules.

13. Procédé de fabrication selon l'une des revendications 11 à 12, dans lequel la fabrication des particules d'aérogel (5) comporte la sous-étape suivante :
- séchage des particules, intégralement opéré à une pression supérieure au point critique du CO₂.

14. Procédé de fabrication selon la revendication précédente, dans lequel la fabrication des particules d'aérogel (5) comporte les sous-étapes suivantes :
- mélange d'un précurseur avec un solvant de synthèse et un agent d'hydrolyse tel que l'eau, et le cas échéant un catalyseur, pour obtenir un gel,
- granulation du produit obtenu, pour obtenir des particules,
- maintien des particules en contact avec le solvant de synthèse et l'agent d'hydrolyse,
- lavage des particules par ajout d'un solvant de lavage pour en extraire notamment l'agent d'hydrolyse et le cas échéant le catalyseur,
- séchage des particules pour en extraire les solvants de synthèse et/ou de lavage par envoi en excès de CO₂ supercritique,
les sous-étapes de granulation, maintien, lavage et séchage sont opérées à une pression supérieure au point critique du CO₂, et ces conditions sont maintenues entre ces étapes.

## Patentansprüche

1. Separator (1), der dazu geeignet ist, zwei Zellen (2) einer Batterie (3), beispielsweise eines Elektro- oder Hybridfahrzeugs, voneinander zu trennen, wobei der Separator (1) mindestens eine Isolierschicht umfasst, die ein Verbundmaterial (4) enthält, wobei das Verbundmaterial (4) ein Bindemittel umfasst, das mit Aerogelpartikeln (5) vermischt ist, wobei das Bindemittel und die Aerogelpartikel (5) den größten Teil des Verbundmaterials (4) ausmachen, **dadurch gekennzeichnet, dass** der Volumenanteil der Aerogelpartikel (5) in dem Verbundmaterial (4) mehr als 20 % beträgt und dass das Bindemittel mineralischer Art ist, insbesondere dass das Bindemittel ein mineralisches Material enthält, dessen Gewichtsanteil mindestens 50 % des Bindemittels ausmacht.

2. Separator (1) nach dem vorstehenden Anspruch, wobei die Summe der Gewichtsanteile der Aerogelpartikel (5) und des Bindemittels in dem Verbundmaterial (4) größer als 80 % ist.

3. Separator gemäß einem der vorstehenden Ansprüche, die mindestens eine zusätzliche Schicht (6) umfasst, wobei die zusätzliche Schicht (6) in jedem quadratischen Bereich mit einer Fläche von mindestens 4 cm², der sich auf einer ihrer Außenflächen befindet, in der Lage ist, sich zu verformen, um mindestens einen Teil einer Volumenverringerung der Separator aufzufangen.

4. Separator gemäß einem der vorstehenden Ansprüche, wobei mindestens eine der mindestens einen zusätzlichen Schicht (6) ein Papier aus Keramikfasern umfasst.

5. Trennvorrichtung nach einem der vorstehenden Ansprüche, wobei mindestens eine der mindestens einen zusätzlichen Schicht (6) auf mindestens einer ihrer Seiten eine dreidimensionale Form aufweist, beispielsweise in Form einer Wabenstruktur.

6. Separator gemäß einem der vorstehenden Ansprüche, wobei die Isolierschicht mindestens ein mechanisches Verstärkungselement aufweist, beispielsweise in Form einer Wabenstruktur.

7. Separator gemäß einem der vorstehenden Ansprüche, wobei das Bindemittel mindestens 30 % Calciumhydroxid enthält.

8. Separator gemäß dem vorstehenden Anspruch, wobei das Bindemittel mindestens 50 %, vorzugsweise mindestens 80 %, Calciumhydroxid enthält.

9. Separator nach einem der vorstehenden Ansprüche, wobei der Volumengehalt der Aerogelpartikel (5) in dem Verbundmaterial (4) mehr als 90 % beträgt.

10. Batterie (3) für ein Elektro- oder Hybridfahrzeug, die mindestens zwei Zellen (2) und mindestens einen Separator (1) gemäß einem der vorstehenden Ansprüche umfasst, der zwischen den Zellen (2) angeordnet ist.

11. Verfahren zur Herstellung eines Separators (1) gemäß einem der Ansprüche 1 bis 9, das die folgenden Schritte umfasst:
- Herstellung der Aerogelpartikel (5),
- Mischen der Aerogelpartikel (5) mit dem Bindemittel in flüssigem Zustand,
- Aushärten der erhaltenen Mischung in einer Form, um das Verbundmaterial (4) zu erhalten.

12. Herstellungsverfahren gemäß dem vorstehenden Anspruch, wobei die Herstellung der Aerogelpartikel (5) die folgenden Teilschritte umfasst:
- Mischen eines Vorläufers mit einem Syntheselösungsmittel und einem Hydrolysemittel wie beispielsweise Wasser sowie gegebenenfalls einem Katalysator, um ein Gel zu erhalten,
- Granulierung des erhaltenen Produkts durch Zerschneiden eines Strahls des Gels, um Partikel zu erhalten.

13. Herstellungsverfahren gemäß einem der Ansprüche 11 bis 12, wobei die Herstellung der Aerogelpartikel (5) den folgenden Teilschritt umfasst:
- Trocknen der Partikel, das vollständig bei einem Druck durchgeführt wird, der über dem kritischen Punkt von CO₂ liegt.

14. Herstellungsverfahren nach dem vorstehenden Anspruch, wobei die Herstellung der Aerogelpartikel (5) die folgenden Teilschritte umfasst:
- Mischen eines Vorläufers mit einem Syntheselösungsmittel und einem Hydrolysemittel wie beispielsweise Wasser sowie gegebenenfalls einem Katalysator, um ein Gel zu erhalten,
- Granulierung des erhaltenen Produkts, um Partikel zu erhalten,
- Aufrechterhaltung des Kontakts der Partikel mit dem Syntheselösungsmittel und dem Hydrolysemittel,
- Waschen der Partikel durch Zugabe eines Waschlösungsmittels, um insbesondere das Hydrolysemittel und gegebenenfalls den Katalysator zu extrahieren,
- Trocknung der Partikel, um die Synthese- und/oder Waschlösungsmittel durch Einleiten von überschüssigem überkritischem CO₂ zu entfernen,
die Teilschritte Granulierung, Aufrechterhaltung, Waschen und Trocknen werden bei einem Druck durchgeführt, der über dem kritischen Punkt von CO₂ liegt, und diese Bedingungen werden zwischen diesen Schritten aufrechterhalten.

## Claims

1. Separator (1) suitable for separating two cells (2) of a battery (3), for example of an electric or hybrid electric vehicle, said separator (1) comprising at least one insulating layer comprising a composite material (4), said composite material (4) comprising a binder mixed with aerogel particles (5), the binder and the aerogel particles (5) representing the major part of the composite material (4), **characterized in that** the volume content of said aerogel particles (5) in said composite material (4) is greater than 20%, and the binder is of mineral type, in particular the binder comprises a mineral material whose content by weight represents at least 50% of the binder.

2. Separator (1) according the preceding claim, wherein the sum of the contents by weight of said aerogel particles (5) and said binder in said composite material (4) is greater than 80%.

3. Separator according to one of the preceding claims, comprising at least one additional layer (6), said additional layer (6) being, at the level of any square zone of an area greater than or equal to 4 cm2 located on one of its external faces, capable of deforming in order to absorb at least part of a reduction in the volume of said separator.

4. Separator according to one of the preceding claims, wherein at least one of said at least one additional layer (6) comprises a ceramic fiber paper.

5. Separator according to one of the preceding claims, wherein at least one of said at least one additional layer (6) has on at least one of its faces a three-dimensional shape, for example in the form of a honeycomb.

6. Separator according to one of the preceding claims, wherein said insulation layer comprises at least one mechanical reinforcement element, for example in the form of a honeycomb.

7. Separator according to one of the preceding claims, wherein said binder comprises at least 30% calcium hydroxide.

8. Separator according to the preceding claim, wherein said binder comprises at least 50%, preferably at least 80% calcium hydroxide.

9. Separator according to one of the preceding claims, wherein the volume content of said aerogel particles (5) in said composite material (4) is greater than 90%.

10. An electric or hybrid electric vehicle battery (3) comprising at least two cells (2), and at least one separator (1) according to one of the preceding claims arranged between said cells (2).

11. Process for manufacturing a separator (1) according to one of claims 1 to 9, comprising the following steps:
- manufacture of aerogel particles (5),
- mixing the aerogel particles (5) with said binder in a liquid state,
- curing the resulting mixture in a mold to obtain said composite material (4).

12. Manufacturing process according to the preceding claim, wherein the manufacture of the aerogel particles (5) comprises the following sub-steps:
- mixing a precursor with a synthesis solvent and a hydrolysis agent such as water, and optionally a catalyst, to obtain a gel,
- granulation of the product obtained by cutting a jet of said gel, to obtain particles.

13. Manufacturing process according to one of claims 12 to 13, wherein the manufacture of the aerogel particles (5) comprises the following sub-step:
- particle drying, performed entirely at a pressure above the CO₂ critical point.

14. Manufacturing process according to the preceding claim, wherein the manufacture of the aerogel particles (5) comprises the following sub-steps:
- mixing a precursor with a synthesis solvent and a hydrolysis agent such as water, and optionally a catalyst, to obtain a gel,
- granulation of the resulting product to obtain particles,
- keeping particles in contact with synthesis solvent and hydrolysis agent,
- washing the particles with a washing solvent to extract the hydrolysis agent and any catalyst,
- drying of particles to extract synthesis and/or washing solvents with excess supercritical CO₂,
the granulation, holding, washing and drying sub-steps are operated at a pressure above the CO₂ critical point, and these conditions are maintained between these steps.
